# EUROPÄISCHE PATENTSCHRIFT

(11) **EP 4 313 540 B1**
(45) Veröffentlichungstag und Bekanntmachung des Hinweises auf die Patenterteilung: **03.09.2025**
(21) Anmeldenummer: 22729438.6
(22) Anmeldetag: 01.06.2022
(51) Int. Cl.: B29C 49/04, B29C 49/42, B29C 49/46, B29C 49/48

(54) **VORRICHTUNG UND VERFAHREN ZUM HERSTELLEN VON GEFORMTEN, BEFÜLLTEN UND VERSCHLOSSENEN BEHÄLTERERZEUGNISSEN AUS KUNSTSTOFFMATERIAL**
APPARATUS AND PROCESS FOR PRODUCING MOLDED, FILLED AND SEALED RECEPTACLE PRODUCTS MADE OF PLASTICS MATERIAL
APPAREIL ET PROCÉDÉ DE PRODUCTION DE PRODUITS DE RÉCEPTACLE MOULÉS, REMPLIS ET ÉTANCHES EN MATIÈRE PLASTIQUE

(30) Priorität: 23.06.2021 DE 102021003226
(43) Veröffentlichungstag der Anmeldung: 07.02.2024
(73) Patentinhaber: Rommelag Engineering GmbH, 74429 Sulzbach-Laufen (DE)
(72) Erfinder: SCHULTES, Michael, 74579 Fichtenau (DE); SOBOTTKA, Michael, 73642 Welzheim (DE); RAWOLLE, Achim, 73433 Aalen (DE)
(74) Vertreter: Bartels und Partner, Patentanwälte
(86) Internationale Anmeldenummer: PCT/DE2022/100410
(87) Internationale Veröffentlichungsnummer: WO 2022/268253

(56) Entgegenhaltungen:
- DE-A1- 102004 004 755
- JP-A- H0 999 477
- US-A- 6 098 676
- US-B1- 6 214 282

## Beschreibung

Die Erfindung betrifft eine Vorrichtung zum Herstellen von geformten, befüllten und verschlossenen Behältererzeugnissen aus Kunststoffmaterial, mit den Merkmalen im Oberbegriff von Anspruch 1.

Blasform-, Füll- und Schließ-Taktmaschinen (BFS-Taktmaschinen) für die aseptische Abfüllung von Arzneimitteln werden in Räumen der Reinraumklasse C aufgestellt. Häufig wird die HEPA-gefilterte Zuluft des Raumes turbulenzarm direkt über die Maschine eingebracht mit dem Ziel, die Maschine vertikal mit Reinluft zu durchströmen. Durch den Aufbau von Taktmaschinen mit vielen horizontal angeordneten Flächen bilden sich Strömungswiderstände, die die vertikale Luftströmung behindern und verwirbein. Die Zuluft dringt daher kaum in die Taktmaschine ein und wird im Wesentlichen nach außen in den Umgebungsraum umgelenkt. Durch gezielte Lenkung der Zuluft über Leitbleche o. ä. ist es möglich, den Anteil der Zuluft, die die Maschine durchströmt, deutlich zu erhöhen und dergestalt das Kontaminationsrisiko zu verringern. Dies kann aber nicht verhindern, dass die Zuluft auf dem Weg bis zum kritischen Bereich verschiedene unkontrollierte, respektive unsterile, Flächen überströmt. Diese Zuluft kann daher nicht als Klasse-A-Luftversorgung eingestuft werden. Ein typischer Vertreter für eine dahingehende Taktmaschine mit Transport eines aus einem Schlauchkopf extrudierten, offenen Vorformlings von einer Extrusionsin eine Füllposition ist beispielsweise in US 4 707 966 beschrieben. Hierbei wird mit einem Extruder ein wärmeweicher Schlauch extrudiert, der in eine zweiteilige Form aufgenommen, dabei ein offenes Schlauchstück als sogenannter Vorformling abgeschnitten und danach der offene Vorformling zu einer Blas- und/oder Füllstation bewegt wird. An dieser Position wird durch Aufsetzen des Blas- und/oder Fülldorns der Behälter ausgeformt, befüllt und sodann kopfseitig verschlossen. In alternativer Weise gemäß der Lehre der nachveröffentlichten DE 10 2020 002 077 kann mit Hilfe eines geeigneten Transportsystems auch der Transport von abgetrennten, wärmeweichen Schlauchabschnitten, die als Vorformling ebenfalls nach oben hin offen sind zu einer stationären Form einer Formeinrichtung erfolgen.

In jedem Fall werden - kennzeichnend für Taktmaschinen - insoweit offene Behälter-Vorformlinge zwischen zwei Positionen, genauer gesagt zwischen zwei Bereichen, dem Extrusions- oder Schlauchkopfbereich und dem Form-/ Füllbereich transportiert, wodurch das Risiko einer partikulären und/ oder mikrobiologischen Kontamination auf diesem Transportweg gegeben ist.

Um im Schlauchkopfbereich das Kontaminationsrisiko, insbesondere durch Partikel, die beim Trennen des Schlauches entstehen können, zu verringern, wird in der US 2019/0375145 A1 eine ringförmige Absaugdüse vorgeschlagen, die den Extrusionskopf umgibt. Durch den eingestellten Unterdruck werden dergestalt Partikel nach oben abgesaugt, wobei die hier angestrebten Gasgeschwindigkeiten bei mindestens 20 m/s, bevorzugt bei 30 bis 60 m/s, liegen.

Die aufwärtsgerichtete Vertikalströmung und die hohen Strömungsgeschwindigkeiten haben den Nachteil, dass hierdurch zeitgleich kontaminierte Umgebungsluft angesaugt wird und dergestalt Partikel aus der Umgebungsluft in den offenen Schlauch gelangen können, was zu einer Verunreinigung des in dem Behältererzeugnis aufzunehmenden Füllgutes führt.

Das Kontaminationsrisiko im Form-/Füllbereich lässt sich reduzieren, wenn als sterile, partikelarme Luft als steriler Gasvorhang von oben, im Folgenden auch als Vertikalstrom bezeichnet, in den sogenannten Abfüllsterilraum (ASR) eingespeist wird, der kontinuierlich die bewegbaren Fülldorne und den offenen Behälterbereich umgibt. Eine dahingehende Lösung ist beispielhaft in der WO 2019/236526 A1 aufgezeigt worden, wobei im dahingehenden Fall ein teleskopartig ausziehbares Gehäuse als Sterilbereich beschrieben wird.

Die JP H09-99477 A beschreibt eine Vorrichtung zum Herstellen von geformten, befüllten und verschlossenen Behältererzeugnissen aus Kunststoffmaterial mit den Merkmalen im Oberbegriff von Anspruch 1 mit
- einem Schlauchkopf zur Abgabe mindestens eines mittels einer Extrusionseinrichtung extrudierten Schlauches;
- einer Trenneinrichtung zum Abtrennen eines Vorformlings vom Schlauch;
- einer Hauptform zur Aufnahme mindestens eines Vorformlings im Rahmen seiner Formgebung;
- einer Übergabeeinrichtung zur Übergabe des Vorformlings vom Schlauchkopf an eine Fülleinrichtung zum Befüllen über eine Öffnung des Vorformlings; und
- einer Zufuhreinrichtung für ein Sterilfluid, die eine Umströmung zumindest eines Fülldornes der Fülleinrichtung ermöglicht,
wobei eine weitere Zufuhreinrichtung für Sterilfluid vorhanden ist, das zumindest die Öffnung des Vorformlings im Bereich unterhalb des Schlauchkopfes zumindest teilweise vor Kontamination schützt.

Weitere Vorrichtungen gehen aus der DE 10 2004 004 755 A1, der US 6 098 676 A und der US 6 214 282 B1 hervor.

Ausgehend von diesem Stand der Technik liegt der Erfindung die Aufgabe zugrunde eine Vorrichtung zu schaffen, die auf einfache und kostengünstige Weise sicherstellt, dass die offenen Vorformlinge zusätzlich auch während des Transfers zwischen dem Schlauchkopfbereich und dem Form-/Füllbereich in hohem Maße gegen partikuläre, chemische und/oder mikrobiologische Kontaminationen, im Folgenden auch kurz als Kontamination bezeichnet, geschützt sind.

Eine dahingehende Aufgabe löst eine Vorrichtung mit den Merkmalen des Patentanspruches 1 in seiner Gesamtheit.

Gemäß dem Kennzeichen von Anspruch 1 ist vorgesehen, dass die Strömungsrichtung des jeweiligen Sterilfluids von der einen Zufuhreinrichtung stammend einen vorgebbaren Winkel von 65 Grad bis 115 Grad, vorzugsweise von 90 Grad, zu der Strömungsrichtung des jeweiligen Sterilfluids der weiteren Zufuhreinrichtung einnimmt.

Dadurch, dass eine weitere Zufuhreinrichtung für Sterilfluid vorhanden ist, das zumindest die Öffnung des Vorformlings im Bereich unterhalb des Schlauchkopfes zumindest teilweise vor Kontamination schützt, wird auch während des Transports des Vorformlings vom Schlauchkopfbereich zum Form-/Füllbereich der Fülleinrichtung die offene Befüllöffnung des Vorformlings kontinuierlich und an jeder räumlichen Position mittels Sterilfluid gegen partikuläre, chemische und/oder mikrobiologische Kontamination geschützt. Insbesondere wird dabei ein Anströmen der offenen Befüllöffnung der Vorformlinge mittels Sterilfluid durch eine Strömung, im Folgenden auch kurz Querstrom bezeichnet, im Wesentlichen senkrecht zur Bewegungsrichtung der Vorformlinge und im Wesentlichen senkrecht zur Extrusionsrichtung angestrebt. Das Sterilfluid ist dabei bevorzugt durch ein partikelarmes, steriles Gas oder durch Gasmischungen wie Stickstoff, Kohlendioxid, Luft oder ähnliches verwirklicht. Innerhalb einer Anlage können zeitgleich verschiedene Sterilfluide zum Einsatz kommen.

Die erfindungsgemäße Vorrichtungslösung ist insoweit für einen Durchschnittsfachmann auf diesem Gebiet überraschend, als eigentlich beim winkligen Aufeinandertreffen zweier Gasströme Verwirbelungen und/oder Induktionsströme zu erwarten sind, welche die notwendige, gleichmäßige und gleichgerichtete Schutzströmung unmöglich machen. Durch die erfindungsgemäße Lösung ist gerade dies aber vermieden, was im Folgenden noch näher erläutert werden wird.

Unerwünschte Strömungseffekte werden im Wesentlichen eliminiert, indem in einer bevorzugten Ausführungsform der erfindungsgemäßen Vorrichtung vorgesehen ist, dass die weitere Zufuhreinrichtung für die Zufuhr von Sterilfluid eine Abgabeeinrichtung aufweist, die zum einen einen sehr geringen Abstand zu den offenen Vorformlingen aufweist und zum anderen mit einem Strömungsgleichrichter zur Vergleichmäßigung der Fluidströmung versehen ist. Aufgrund dieser Vorrichtungen kann das Sterilfluid auch über die große Strecke von Schlauchkopfbereich zum Form-/Füllbereich senkrecht zum Verfahrweg der offenen Vorformlinge verwirbelungsarm ausgebracht werden.

Zur weiteren Verbesserung der Strömungsverhältnisse, insbesondere zur Vermeidung von induzierten Strömungen, ist besonders bevorzugt vorgesehen, dass neben der erfindungsgemäßen Abgabeeinrichtung eine Aufnahmeeinrichtung vorhanden ist, die zumindest Randbereiche des von der Abgabeeinrichtung ausgebrachten Fluides aufnimmt und abführt. Dergestalt wird ein geringer Anteil der mittels des Strömungsgleichrichters ausgebrachten laminar strömenden Sterilluft mittels der Aufnahmeeinrichtung abgesaugt und die Strömung stabilisiert. Wichtig hierbei ist, dass sich die Abgabeeinrichtung und die Aufnahmeeinrichtung bevorzugt in unmittelbarer räumlicher Nähe zueinander befinden. Im Sinne eines wirksamen Kontaminationsschutzes hat es sich dabei in der Praxis bewährt, mit einem Zuluftstrom von 200 bis 800 m³/h, bevorzugt von 400 bis 600 m³/h, zu arbeiten, während der Abgasstrom über die Aufnahmeeinrichtung etwa ein Zwanzigstel des Zuluftstromes ausmachen sollte.

Besondere Bedeutung kommt den Gasströmungen am Übergang der beiden aneinander angrenzenden Bereiche, Schlauchkopfbereich und Form-/Füllbereich, zu. An diesem Übergang treffen Querstrom und Vertikalstrom aufeinander. Hierzu ist bei einer weiteren bevorzugten Ausführungsform der erfindungsgemäßen Vorrichtung vorgesehen, dass die eine Zufuhreinrichtung für den Vertikalstrom neben beweglichen Strömungsleitblechen eine Strömungsfläche für die Zufuhr eines Sterilfluids aufweist mit einzelnen Strömungsleitkanälen, die fluidführend miteinander verbunden sind, die von den einzelnen Fülldornen unter Beibehalten eines vorgebbaren Abstandes durchfahrbar sind. Vorzugsweise ist dabei ferner vorgesehen, dass für die fluidführende Verbindung der Strömungsleitkanäle untereinander ein Zentralkanal die Strömungsfläche durchgreift, der zumindest an einem Ende eine Erweiterung der Querschnittsfläche aufweist. Dergestalt lassen sich unabhängig von der jeweiligen Fülldornposition räumlich stabile Strömungsverhältnisse, insbesondere auch am Übergang vom Schlauchkopfbereich zum angrenzenden Form-/Füllbereich, erzielen und die Kontamination des Behälterinneren sicher vermeiden.

Bei einer weiteren bevorzugten Ausführungsform der erfindungsgemäßen Vorrichtung ist vorgesehen, dass im Schlauchkopfbereich entlang der Trennzone der Trenneinrichtung, im Folgenden auch kurz als Messer bezeichnet, eine weitere dritte Zufuhr- und/oder Abfuhreinrichtung für ein Fluid vorhanden ist, die während des Abtrennvorganges des Vorformlings vom Extrusionsschlauch eine kontaminationsarme Umgebung in der Trennzone sicherstellt. Das Trennen erfolgt üblicherweise durch eine Art Messer, das bevorzugt als Heißmesser konzipiert beheizbar ist, oder optional als Vibrationsmesser konzipiert vibrierend schneiden kann, ebenso ist ein berührungsloses Trennen mittels Laserstrahlung durch ein Lasermesser möglich. Bei all diesen Trennverfahren ist die Entstehung von Partikeln, Gasen, Dämpfen oder Rauch nicht vollständig auszuschließen. Um auch eine somit mögliche Kontamination des Vorformlings oder Behälters ausschließen zu können, hat es sich als vorteilhaft erwiesen, diese durch eine direkte Messerabsaugung aus der Trennzone des Schlauchkopfbereichs abzuführen. In besonders vorteilhafter Weise geschieht dies nicht nach der im Stand der Technik (US 2019/0375145 A1) beschriebenen Weise in vertikaler Richtung nach oben mittels einer Ringdüse, sondern vielmehr im Wesentlichen senkrecht zum Austritt der Extrusionsschläuche durch eine entsprechende Schlitzdüse. Die Strömungsrichtung in der Schlitzdüse entspricht dabei in vorteilhafter Weise der Strömungsrichtung der Querstrom-Zuluft, so dass insoweit auch ein Teil der Querstrom-Zuluft durch die Schlitzdüse der Messerabsaugung mit abgeführt werden kann. Um Verwirbelungen und ähnlich unerwünschte Strömungseffekte zu minimieren, hat es sich erfindungsgemäß besonders bewährt, die Schlitzdüse in einem konstanten Abstand zum jeweiligen Messer anzubringen, d. h. sie in synchronisierter Weise zusammen mit dem Messer zu betreiben respektive zu bewegen. Alternativ hierzu kann auch vorgesehen sein, vergleichbar wie bei der weiteren Zufuhreinrichtung, eine eigenständige Zu- bzw. Abfuhreinrichtung für ein Sterilfluid bzw. Umgebungsluft vorzusehen, die aus dem Bereich der Trennzone gleichfalls mit abgeführt werden kann.

Bei einer weiteren bevorzugten Ausführungsform der erfindungsgemäßen Vorrichtung ist vorgesehen, dass eine weitere vierte Zufuhreinrichtung für ein optional unterschiedliches Sterilfluid vorgesehen ist, die als Stützfluid in Extrusionsrichtung auf den vom Schlauchkopf der Extrusionseinrichtung extrudierten Schlauch einwirkt. Dergestalt lässt sich auch beim Austritt des extrudierten Schlauches aus dem Schlauchkopf zum einen ein geradliniger Abgabeverlauf herstellen und gleichfalls die kontaminationsfreie Umgebung im Schlauchkopfbereich zusätzlich sicherstellen.

Bei einem erfindungsgemäßen Verfahren zum Herstellen eines geformten, befüllten und verschlossenen Behältererzeugnisses, insbesondere mit einer Vorrichtung wie vorstehend beschrieben, sind zumindest die folgenden vorteilhaften Herstellschritte vorgesehen:
- Aufbringen eines Sterilfluids auf die Öffnung eines Vorformlings während sich dieser zumindest teilweise und zeitweise im Bereich unterhalb des Schlauchkopfes befindet,
- Aufbringen eines Sterilfluids auf die Öffnung eines Vorformlings während sich dieser zumindest teilweise und zeitweise im Bereich der Fülleinrichtung befindet und
- Ansteuern der Sterilfluidströme derart, dass diese quer zueinander verlaufen.

"Querverlauf" im Sinne des erfindungsgemäßen Verfahrens bedeutet, dass die Sterilfluidströme, vorzugsweise senkrecht aufeinander stehen; es sollen aber auch schräg verlaufende Zufuhrrichtungen noch miterfasst sein, beispielsweise in einem vorgebbaren eingeschlossenen Winkelbereich von 60 Grad bis zu den genannten bevorzugten 90 Grad. Mit der erfindungsgemäßen Vorrichtungs- und Verfahrenslösung ist erreicht, dass die nach oben hin offenen Vorformlinge in den jeweiligen Bereichen kontinuierlich und insbesondere auch während der Bewegung vom Schlauchkopfbereich zum Form-/Füllbereich in hohem Maße gegen partikuläre, chemische und/oder mikrobiologische Kontaminationen geschützt sind, wobei sowohl die Vorrichtung als auch das Verfahren sich einfach und kostengünstig im Rahmen üblicher Taktmaschinen realisieren lassen.

Im Folgenden wird die erfindungsgemäße Vorrichtung und das damit in Verbindung stehende Verfahren anhand der Vorrichtung nach den Fig. 1 bis 9 näher erläutert. Dabei zeigen in prinzipieller und nicht maßstäblicher Darstellung die
- Fig. 1a, b: in zwei perspektivischen Seitenansichten die wesentlichen Komponenten der Vorrichtung;
- Fig. 2: eine Draufsicht auf wesentliche, freigelegte Komponenten der Vorrichtung nach der Fig. 1;
- Fig. 3, 4, 5: verschiedene Ansichten auf eine Strömungsleiteinrichtung im Rahmen einer Sterilabfüllung für Behältererzeugnisse;
- Fig. 6: einzelne Fülldorne einer Füllvorrichtung, die die in den Fig. 3 bis 5 gezeigten Strömungsleitkanäle durchgreifen;
- Fig. 7: den in Fig. 3 mit "X im Kreis" bezeichneten Teilausschnitt mit in den Strömungsleitkanal eingreifendem Fülldorn; und
- Fig. 8a, b, 9a, b: eine Trenneinrichtung in Seitenansicht und in Draufsicht in jeweils zwei verschiedenen Verfahrstellungen.

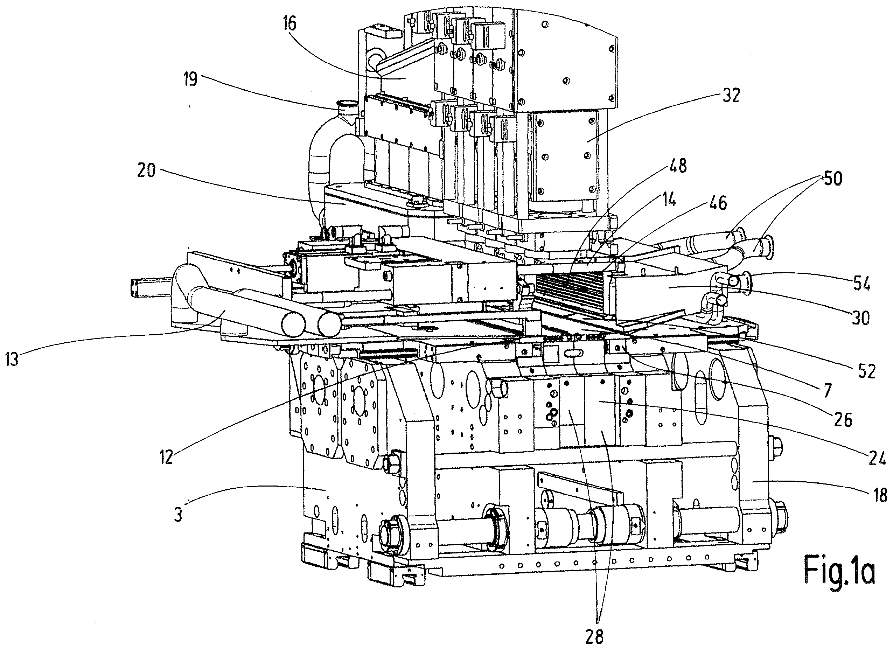

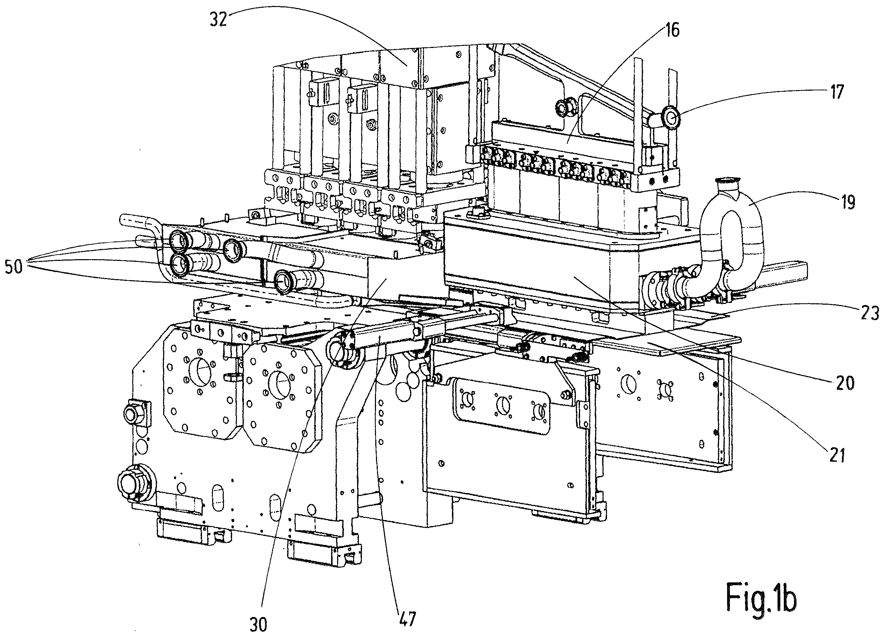

In den Fig. 1a und 1b sind die wesentlichen Komponenten einer Vorrichtung zum Herstellen von geformten, befüllten und verschlossenen Behältererzeugnissen aus Kunststoffmaterial gezeigt. So weist die Vorrichtung einen Schlauchkopf 32 als Teil einer nicht näher gezeigten Extrusionseinrichtung zur Extrusion mindestens eines Schlauches aus einem verformbaren Kunststoffmaterial auf, wobei aus dem Schlauchkopf 32 bevorzugt mehrere solcher Schläuche zeitgleich nebeneinander austreten. Des Weiteren ist eine bewegliche Trennvorrichtung 12 (im Folgenden kurz auch Messer genannt) vorhanden zum Abtrennen eines Vorformlings vom jeweils zuordenbaren extrudierten Schlauch. Neben einer ersten Zufuhreinrichtung 20 an der Stelle einer Fülleinrichtung 16 weist die erfindungsgemäße Vorrichtung zusätzlich am Schlauchkopfbereich zum Schutz der Vorformlinge vor möglicher Kontamination eine weitere Zufuhreinrichtung 30 für ein Sterilfluid zum Anströmen der Vorformlinge, insbesondere von deren Öffnung, auf. Im Folgenden ist der diesbezügliche Strömungsverlauf auch kurz Querstrom genannt.

In üblicher Weise dient eine Übergabeeinrichtung in Form eines Schlauchgreifers 14 zur Übergabe der offenen Vorformlinge in eine offene Form 24 einer Formeinrichtung 18. Ferner sind diesbezügliche Haltebacken 7 auf der Oberfläche der Oberseite der Formeinrichtung 18 vorhanden. Die Form 24 kann sich hierbei entweder unterhalb des Schlauchkopfes 32 oder in einer anderen Ausführungsform (DE 10 2020 002 007) bereits im Form-/Füllbereich befinden. Im Folgenden wird nur der erste Fall beschrieben, für den zweiten Fall kann entsprechend analog vorgegangen werden.

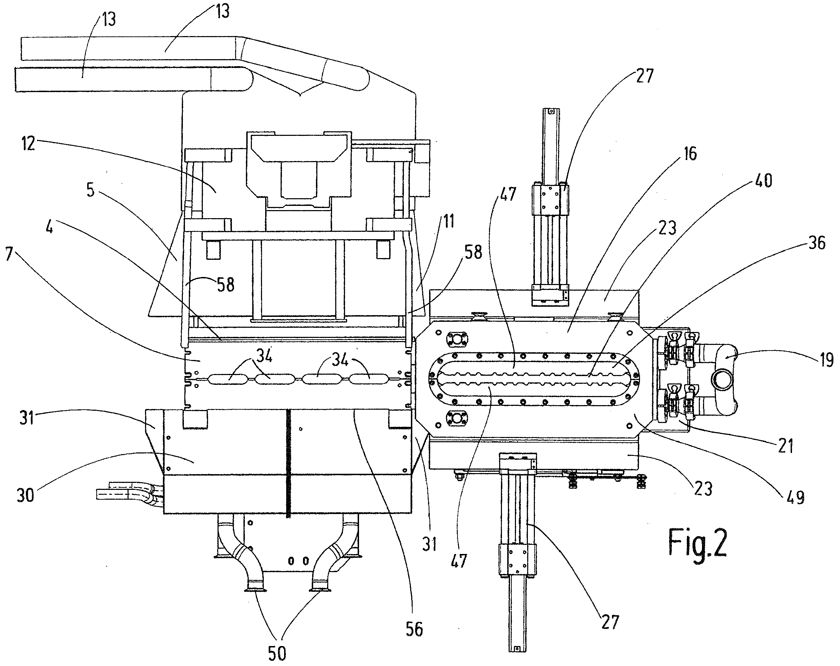

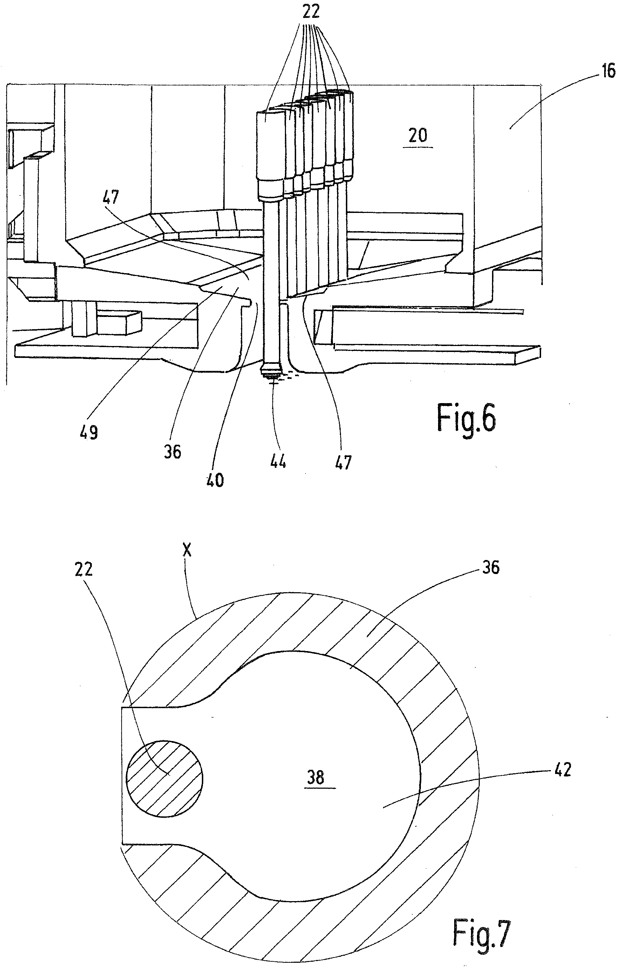

Die Formeinrichtung 18 als Teil einer Schließeinheit 3 weist in üblicher Weise für einen Behälterformvorgang aus dem jeweiligen Vorformling eine Hauptform 24 und eine Kopfform 26 auf. Die jeweilige Form 24, 26 besteht aus einzelnen Formhälften 28, die aus der in der Fig. 1 geschlossenen Position für einen Aufnahmevorgang des Vorformlings voneinander wegbewegt werden können. Hauptform 24 und Kopfform 26 sind getrennt voneinander mit ihren jeweiligen Formhälften 28 ansteuerbar. Ist bei geöffneter Hauptform 24 der Vorformling mittels der Greifer 14 in der vorgesehenen Position, schließt bei geöffneter Kopfform 26 die Hauptform 24 und bewegt sich linear aus dem Bereich unter dem Schlauchkopf 32 in den angrenzenden Form-/Füllbereich unterhalb einer Fülleinheit 16 und über eine Füllgutzuführung 17 (Fig. 2) wird die Fülleinheit 16 mit Füllgut in üblicher Weise beschickt. Dort setzt der Blas- und/ oder Fülldorn 22 (Fig. 6) der Fülleinrichtung 16 auf der Öffnung des Vorformlings auf, und es erfolgt die Formung durch Blasen und/ oder Vakuumformen, sodann das Befüllen über dessen Befüllöffnung und das kopfseitigen Verschließen durch Schließen der Kopfform 26.

Anschließend werden für eine Entnahme des fertigen Behältererzeugnisses beide Formen 24, 26 wiederum geöffnet, verschlossene Behälter ausgebracht und die Formen 24, 26 wieder in den Schlauchkopfbereich zurückbewegt, damit ein erneuter Herstellvorgang vonstattengehen kann. Der dahingehende Herstellprozess ist bei (Blas-)Form-, Füll- und Schließverfahren für ein Behältererzeugnis üblich, so dass an dieser Stelle hierauf nicht näher detailliert eingegangen wird.

Die erfindungsgemäße Zufuhreinrichtung 30, die sich im Wesentlichen über die gesamte axiale Öffnungslänge der Formeinrichtung 18, also längs des gesamten Schlauchkopfbereichs, erstreckt und an den Form-/Füllbereich unmittelbar angrenzt, ermöglicht es so, die Öffnung der Vorformlinge lückenlos und kontinuierlich vor Kontamination zu schützen. Vorteilhafterweise beträgt der Abstand der Abgabeeinrichtung der Zufuhreinrichtung 30 zur Öffnungsebene der Formeinrichtung 18 weniger als 40 cm, bevorzugt weniger als 25 cm, besonders bevorzugt weniger als 20 cm.

Während in Blickrichtung auf die Fig. 1 gesehen über die erste Zufuhreinrichtung 20 mit Zufuhranschluss 19 im Form-/Füllbereich ein Sterilfluid im Wesentlichen vertikal von oben nach unten abströmt (Vertikalstrom) und durch die beweglichen Strömungsleitbleche 21, 23 geführt werden können, ist die Strömungsrichtung für das Sterilfluid der weiteren Zufuhreinrichtung 30 mit den weiteren Strömungsleitblechen 31 (Fig. 2) demgegenüber horizontal ausgerichtet (Querstrom), so dass die beiden Strömungsrichtungen der beiden Zufuhreinrichtungen 20, 30 für das Sterilfluid einen vorgebbaren Winkel von 90 Grad zueinander einnehmen. Über Bewegungseinheiten 27 sind die beiden gewinkelten Leitbleche 23 verschiebbar, was insbesondere die Reinigung und/oder die Sterilisation des Form-/Füllbereiches erleichtert. Das Leitblech 21 ist abgestimmt auf die Transferbewegung der Vorformlinge bewegbar (Details sind nicht dargestellt.).

Mit der erfindungsgemäßen Lösung sind Zufuhreinrichtungen 20, 30 realisiert, die ein sehr gutes Ergebnis bei der Vermeidung von Kontamination, insbesondere im Bereich der Befüllöffnung eines Behältererzeugnisses erlauben. Je nach Einbauverhältnissen an einer erfindungsgemäßen Vorrichtung kann aber auch der dahingehende Strömungswinkel verändert sein, beispielsweise größer oder kleiner als 90 Grad sein.

Wie insbesondere die Fig. 2 zeigt, weist die Extrusionseinrichtung einen Schlauchkopf 32 auf, der die Herstellung von vier Schläuchen in vier voneinander getrennten Schlauchpositionen 34 erlaubt. Die Trennung der Vorformlinge vom Schlauch erfolgt über das bewegliche Messer 4 einer Trenneinrichtung 12; dabei möglicherweise entstehende Kontaminanten können über eine ebenfalls bewegbare Messerabsaugung 5 und über die Anschlüsse 13 abgeführt werden. Senkrecht zur Austrittsrichtung der Schläuche wird über die weitere Zufuhreinrichtung 30 ein Sterilfluid ausgebracht. Die vier Vorformlinge werden an den Positionen 34 in die Form aufgenommen und in der Hauptform 24 vom Schlauchkopfbereich in den Form-/Füllbereich der Fülleinheit 16 bewegt. In diesem Bereich besteht ausgehend von der Zufuhreinrichtung 20 auch geführt durch die Leitbleche 21, 23 eine vorwiegend vertikale Strömung zum Schutz der Fülldorne 22 (Fig. 6) und der Füllöffnung der Vorformlinge.

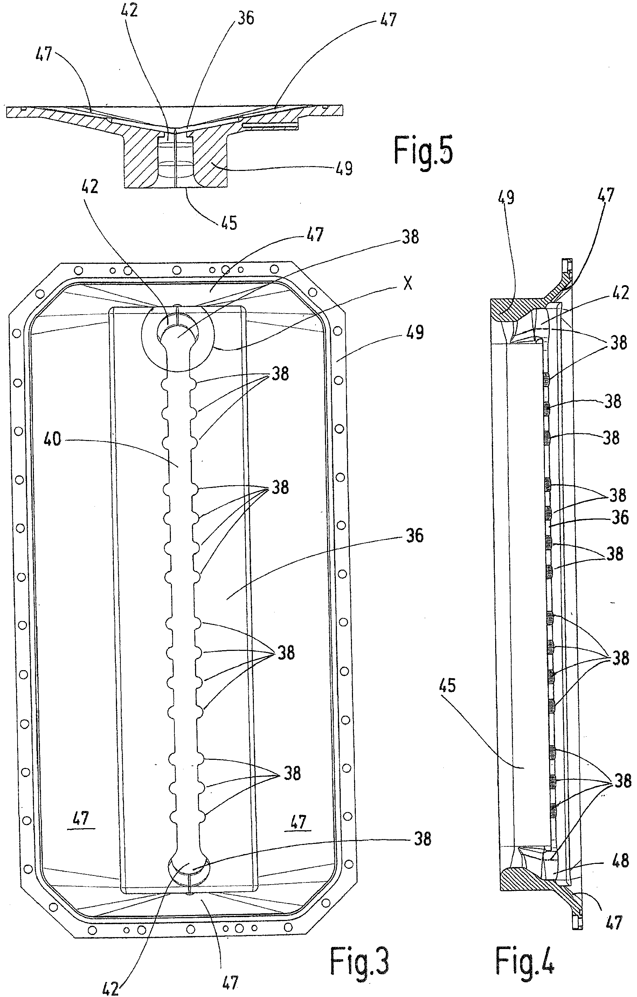

In Fig. 3 ist die Strömungsfläche 36 der ersten Zufuhreinrichtung 20 mit der vorhergehend beschriebenen vorwiegend vertikalen Strömungsrichtung näher dargestellt. Die Strömungsfläche 36 weist einzelne Strömungsleitkanäle 38 auf, die an einen mittigen Durchtrittsschlitz als Zentralkanal 40 anschließen, der endseitig jeweils einen Strömungskanal 38 mit im Durchmesser verbreitertem Querschnitt als Erweiterung 42 anschließt. Ansonsten sind die Strömungsleitkanäle 38, wie dies insbesondere die Fig. 3 zeigt, aus Halbkreis-Querschnittsflächen gebildet, die die Strömungsfläche 36 medienführend durchgreifen und die jeweils in die benachbarten, eben verlaufenden Wandabschnitte der Strömungsfläche 36 übergehen. Jedem Strömungsleitkanal 38 ist ein Fülldorn 22 zugeordnet und bis auf die beiden endseitigen Strömungsleitkanäle 38 in Form der Erweiterung 42 durchgreifen die Fülldorne 22 mittig, unter Einhalten eines vorgebbaren Abstandes, den Zentralkanal 40 bei mittiger Position zu den halbrunden, angrenzenden Kanalabschnitten der Strömungsleitkanäle 38. Der angesprochene Zentralkanal 40 stellt also insoweit die fluidführende Verbindung der Strömungsleitkanäle 38 für das Sterilfluid untereinander her und bildet insoweit einen Durchtrittsschlitz, der die ansonsten geschlossene Strömungsfläche 36 durchgreift. Wie die Fig. 3 und 7 am besten zeigen, weist der Zentralkanal 40, wie bereits dargelegt, an seinen jeweiligen gegenüberliegenden Enden Erweiterungen 42 der freien Querschnittsfläche auf, wobei der jeweils zuäußerst angeordnete Fülldorn 22 gemäß der Darstellung nach der Fig. 7 die dahingehende Erweiterung 42 nicht durchgreift, sondern sich randseitig an diese in Richtung der benachbarten Strömungsleitkanäle 38 anschließt. Insoweit weisen aber die Vierergruppen von Fülldornen 22 den gleichen Abstand zueinander auf; ebenso sind die Abstände zwischen den Fülldornen 22 einer Vierergruppe gleich.

Wie in Fig. 6 gezeigt ist, können je extrudiertem Schlauch vier Fülldorne 22 die Befüllung des in der Hauptform 24 geformten Behälters vornehmen.

Als besonders vorteilhaft hat es sich erwiesen, die Querschnittsfläche mindestens einer endseitigen Erweiterung 42 etwa zwischen dem 8 bis 12-fachen der Querschnittsfläche eines der Fülldorne 22 zu wählen. Bei dem hier aufgezeigten Füllsystem der Fülleinrichtung 16 kommen also vier Gruppen mit je vier Fülldornen 22, also insgesamt sechzehn rohrartige Fülldorne 22 zum Einsatz, mit jeweils einem Durchmesser von etwa 10 mm und einem Konus 44 (siehe Fig. 6) mit einem Durchmesser von etwa 15 mm. Hierbei wurde die gesamte Querschnittsfläche des Zentralkanals 40, in der Art einer Schlitzdüse ausgebildet, mit ca. 86 cm² gewählt bei einer hierzu beabstandeten Querschnittsfläche eines Fülldornes 22 von 0,8 cm².

Hierbei ergeben sich in vorteilhafter Weise stabile Strömungsverhältnisse, unabhängig von der Fülldornposition und auch am Übergang von Schlauchkopfbereich und Form-/Füllbereich, wenn insoweit die teilweise halbkreisförmigen Flächen FA eines jeden zwischen den beiden Erweiterungen 42 liegenden Strömungsleitkanales 38 etwa 40 bis 80 % der Querschnittsfläche FD eines typischerweise zylindrischen Fülldorns 22 entspricht; also FA = 0,4 * FD bis FA = 0,8 * FD, bevorzugt FA = 0,5 * FD. Gemäß der Darstellung nach der Fig. 6 wird also die Sterilluft über die Zufuhreinrichtung 20 außenumfangsseitig entlang der Fülldorne 22 von oben nach unten in der Art eines geschlossenen Vorhanges geführt, und die Sterilluft verlässt den Zentralkanal 40 mit seinen einzelnen Strömungsleitkanälen 38 auf der Unterseite 45 (Fig. 5) der insoweit gebildeten Strömungsfläche 36 als Bestandteil der Zufuhreinrichtung 20. Die hier angegebene Realisierung ist nur beispielhaft; so kann die Anzahl der extrudierten Schläuche, Fülldorne 22 und die Anzahl der Einzelformen der Formeinrichtung 18 auch anders gewählt werden.

Wie sich weiter aus der Fig. 5 ergibt, sind die Flächenteile 47 der Strömungsfläche 36 in Richtung des mittigen Zentralkanales 40 geneigt ausgebildet, beispielsweise entlang einer Schräge von 15 bis 30 Grad, vorzugsweise von etwa 20 Grad, angeordnet, sodass insoweit der Zentralkanal 40 mit seinen Erweiterungen 38 die tiefste Stelle innerhalb der Strömungsfläche 36 ausbildet. Wie insbesondere die Fig. 4 zeigt, ist die Strömungsfläche 36 Bestandteil eines modular aufgebauten Strömungskastens 49, der sich in verschiedenen Baugrößen realisierbar für verschiedenste Maschinentypen der erfindungsgemäßen Vorrichtung angepasst einsetzen lässt.

Wie sich weiter aus der Fig. 1 ergibt, weist die weitere Zufuhreinrichtung 30 für die Zufuhr eines Sterilfluids eine rechteckförmige Abgabeeinrichtung 46 auf, die zur Vergleichmäßigung der Fluid- oder Strömungsführung mit einem Strömungsgleichrichter 48 versehen ist, in Form einzelner parallel zueinander verlaufender Leitbleche, die insoweit die Bildung einer laminaren und nicht turbulenten Strömung der Sterilluft unterstützen. Insoweit bildet die weitere Zufuhreinrichtung 30 eine Art Zuluftkasten aus, der in Einzelkammern zur verbesserten Strömungsführung auch unterteilt sein kann und im rückwärtigen Bereich Fluidanschlüsse 50 für die Zuleitung der Sterilluft aufweist. Weitere Leitbleche 31 (Fig. 2) führen die Strömung des Sterilfluides in den Randbereichen, insbesondere zum angrenzenden Form-/Füllbereich.

Neben der Abgabeeinrichtung 46 ist eine Aufnahmeeinrichtung 52 vorhanden, die Umgebungsluft und teilweise das von der Abgabeeinrichtung 46 abgeströmte Sterilfluid aufnimmt und aus einer Abgabezone im Bereich des Überganges über mindestens eine Anschlussleitung 54 medienführend aus der Vorrichtung abführt. Mit dieser teilweisen Strömungsüberlagerung konnten überraschenderweise Induktionsströme unterdrückt und insgesamt eine laminare, turbulenzarme Querströmung erreicht werden. Vorzugsweise ist die Aufnahmeeinrichtung 52 mit einer schlitzförmigen Öffnung versehen, deren freier Querschnitt kleiner ist als die Rechteck-Abgabefläche der Abgabeeinrichtung 46. Ferner erstreckt sich die Schlitzöffnung im Wesentlichen über die gesamte Länge der Zuführung 30 parallel zur Öffnungsebene der Formhälften 26 der Formeinrichtung 18. Jedenfalls ist die Querströmung mittels der Abgabeeinrichtung 46 derart gewählt, dass die insbesondere von den Kopfformhälften 26 freigegebenen Öffnungen der Vorformlinge von der Sterilluft innerhalb, auch während der Bewegung der Vorformlinge zur Fülleinrichtung 16 seitlich überstrichen werden.

Vorzugsweise ist bei der erfindungsgemäßen Vorrichtung ferner vorgesehen, dass entlang des beweglichen Messers 4 (Fig. 2) der Trenneinrichtung 12 die weitere Abfuhreinrichtung 5 mit Anschlüssen 13 für Kontaminanten, wie beispielsweise Partikel, Gase, Dämpfe, Rauch, vorgesehen ist, die in einer schlitzförmigen Düse 11 endend gebildet sein kann, die im Wesentlichen senkrecht zur Extrusionsrichtung und parallel zum Messer 4 verläuft. Die Strömungsrichtung in der Schlitzdüse 11 kann dabei in vorteilhafter Weise der Strömungsrichtung der Querstrom-Zuluft entsprechen, die von der Abgabeeinrichtung 46 herrührt. Somit kann ein Teil der Querstrom-Zuluft über die Abgabeeinrichtung 46 durch die Schlitzdüse 11 der Messerabsaugung 5 durch deren Anschlüsse 13 abgeführt werden. Um unnötige Verwirbelungen und ähnliche unerwünschte Strömungseffekte zu minimieren, hat es sich als vorteilhaft erwiesen, die Schlitzdüse in einem konstanten Abstand zum Messer 4 anzubringen und sie bevorzugt in synchronisierter Weise zusammen mit dem Messer 4 zu betätigen, respektive zu bewegen. Alternativ oder zusätzlich besteht auch die Möglichkeit, eine vollständig eigenständige Zufuhr- und Abfuhreinrichtung (nicht dargestellt) für Sterilfluid im Bereich der Trenneinrichtung 12 vorzusehen, die unabhängig von den Zufuhreinrichtungen 20, 30 arbeitet.

Bei einer weiteren Ausführungsform der erfindungsgemäßen Vorrichtung kann eine weitere vierte Zufuhrrichtung (nicht dargestellt) für Sterilfluid im Schlauchkopf 32 vorgesehen sein, die als Stützfluid im Inneren des extrudierten Schlauches wirkt. Mit den vorgenannten Maßnahmen der Strömungsführungen, basierend auf Stützfluid, Messerabsaugung 5, Zuführung 30, Aufnahme 52 im Schlauchkopfbereich sowie Zuführung 20 im Form-/ Füllbereich nebst Leitblechen 21, 23 ist es somit möglich, an allen Herstellpositionen, eine verlässliche, kontaminationsarme Behälterherstellung zu realisieren. Dies hat so keine Entsprechung im Stand der Technik.

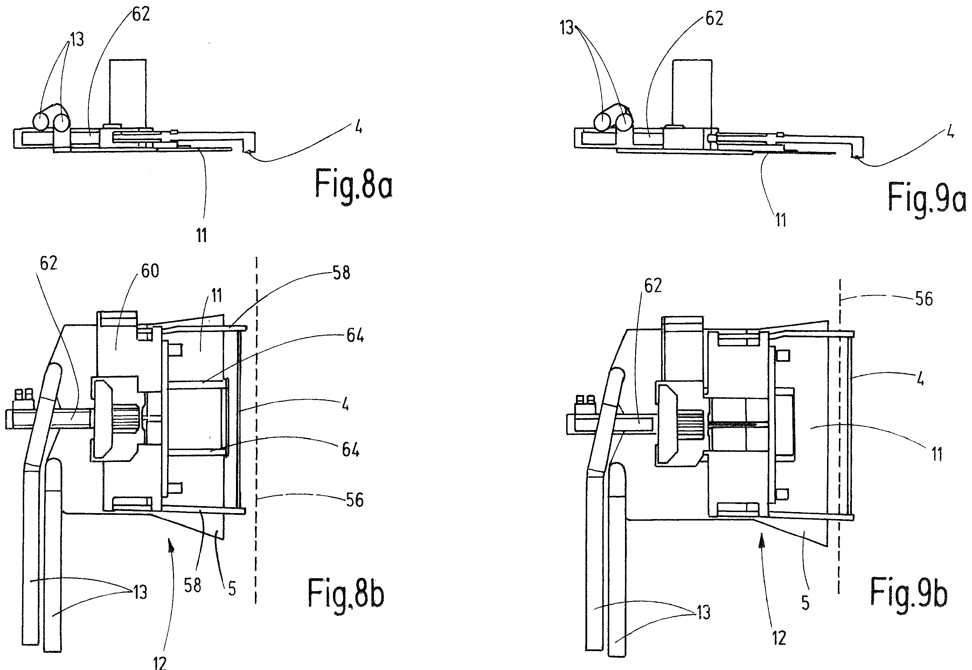

Im Folgenden wird die erfindungsgemäße Trenneinrichtung anhand der Fig. 8a, 8b, 9a und 9b nochmals näher erläutert, die dem Bewegen der Schlitzdüse 11 nebst dem Messer 4 der Trenneinrichtung 12 dient. Das klingenartige Messer 4 in der Art eines Schneiddrahtes oder einer Stahlklinge ausgebildet, ist zwischen zwei Bügeln 58 aufgenommen, die an einem Ende der Messerführung dienen und am anderen Ende mit einem Schlitten 60 verbunden sind, der mittels eines elektrisch antreibbaren Linearzylinders 62 zusammen mit der Schlitzdüse 11 vor- und zurückverfahrbar ist, wobei in der zurückgefahrenen Stellung nach den Fig. 8a und 8b die Trennzone 56 freigelassen ist und in der Darstellung nach den Fig. 9a und 9b ist die dahingehende Trennzone 56 für einen Durchtrennvorgang der Vorformlinge von Teilen der Trenneinrichtung 12 überfahren. Zur Unterstützung der Verfahrbewegung sind zwei Führungswellen 64 vorhanden, die stationär angeordnet eine Führung für die Längsbewegung des Schlittens 60 bilden, an dem die Schlitzdüse 11 angeordnet ist sowie das linienförmige Messer 4.

Mit der vorgestellten Vorrichtung lässt sich ein Verfahren zum Herstellen eines geformten, befüllten und verschlossenen Behältererzeugnisses durchführen, mit den folgenden charakteristischen Herstellschritten:
- Aufbringen eines Sterilfluids auf die Öffnung eines Vorformlings während dessen Trennung vom Schlauch, während der Vorformling sich im Schlauchkopfbereich unterhalb eines Schlauchkopfes 32 befindet und während der Bewegung der Vorformlinge hin zum Form-/ Füllbereich einer Fülleinrichtung 16:
- Aufbringen eines Sterilfluids während sich der offene Vorformling im Form-/Füllbereich der Fülleinrichtung 16 befindet; und
- Ansteuern der Sterilfluidströme derart, dass diese quer zueinander verlaufen.

Mit dem dahingehenden Verfahren unter Einsatz der Vorrichtung lassen sich Behältererzeugnisse erhalten, wie sie beispielhaft in der DE 10 2018 007 991 A1, der DE 10 2016 002 467 A1 etc. aufgezeigt sind und die insbesondere für die sterile Bevorratung von pharmazeutischen Erzeugnissen dienen.

## Patentansprüche

1. Vorrichtung zum Herstellen von geformten, befüllten und verschlossenen Behältererzeugnissen aus Kunststoffmaterial, mit
- einem Schlauchkopf (32) zur Abgabe mindestens eines mittels einer Extrusionseinrichtung extrudierten Schlauches;
- einer Trenneinrichtung (12) zum Abtrennen eines Vorformlings vom Schlauch;
- einer Hauptform (24) zur Aufnahme mindestens eines Vorformlings im Rahmen seiner Formgebung;
- einer Übergabeeinrichtung (14) zur Übergabe des Vorformlings vom Schlauchkopf (32) an eine Fülleinrichtung (16) zum Befüllen über eine Öffnung des Vorformlings; und
- einer Zufuhreinrichtung (20) für ein Sterilfluid, die eine Umströmung zumindest eines Fülldornes (22) der Fülleinrichtung (16) ermöglicht,
wobei eine weitere Zufuhreinrichtung (30) für Sterilfluid vorhanden ist, das zumindest die Öffnung des Vorformlings im Bereich unterhalb des Schlauchkopfes (32) zumindest teilweise vor Kontamination schützt,
**dadurch gekennzeichnet,**
**dass** die Strömungsrichtung des jeweiligen Sterilfluids von der einen Zufuhreinrichtung (20) stammend einen vorgebbaren Winkel von 65 Grad bis 115 Grad zu der Strömungsrichtung des jeweiligen Sterilfluids der weiteren Zufuhreinrichtung (30) einnimmt.

2. Vorrichtung nach Anspruch 1, **dadurch gekennzeichnet, dass** zumindest teilweise während der Übergabe des Vorformlings vom Schlauchkopf (32) zur Fülleinrichtung (16) mittels der Übergabeeinrichtung (14) zumindest die Öffnung des Vorformlings durch ein Sterilfluid vor Kontamination geschützt ist.

3. Vorrichtung nach Anspruch 1 oder 2, **dadurch gekennzeichnet, dass** die Strömungsrichtung des jeweiligen Sterilfluids von der einen Zufuhreinrichtung (20) stammend einen vorgebbaren Winkel von 90 Grad zu der Strömungsrichtung des jeweiligen Sterilfluids der weiteren Zufuhreinrichtung (30) einnimmt.

4. Vorrichtung nach einem der vorstehenden Ansprüche, **dadurch gekennzeichnet, dass** im Bereich der Fülleinrichtung (16) mindestens ein, bevorzugt bewegbares, Strömungsleitblech (21, 23) angebracht ist.

5. Vorrichtung nach einem der vorstehenden Ansprüche, **dadurch gekennzeichnet, dass** die eine Zufuhreinrichtung (20) eine Strömungsfläche (36) für die Zufuhr von Sterilfluid aufweist mit einzelnen Strömungsleitkanälen (38), die fluidführend miteinander verbunden von den einzelnen Fülldornen (22) durchfahrbar sind.

6. Vorrichtung nach Anspruch 5, **dadurch gekennzeichnet, dass** für die fluidführende Verbindung der Strömungsleitkanäle (38) untereinander ein Zentralkanal (40) die Strömungsfläche (36) durchgreift, der zumindest an einem Ende eine Erweiterung (42) der Querschnittsfläche aufweist.

7. Vorrichtung nach einem der vorstehenden Ansprüche, **dadurch gekennzeichnet, dass** die weitere Zufuhreinrichtung (30) für die Zufuhr von Sterilfluid eine Abgabeeinrichtung (46) aufweist, die zur Vergleichmäßigung der Fluidführung mit einem Strömungsgleichrichter (48) versehen ist.

8. Vorrichtung nach Anspruch 7, **dadurch gekennzeichnet, dass** neben der Abgabeeinrichtung (46) eine Aufnahmeeinrichtung (52) vorhanden ist, die zumindest teilweise das von der Abgabeeinrichtung (46) abgeströmte Sterilfluid aufnimmt und aus einer Abgabezone im Bereich des Überganges abführt.

9. Vorrichtung nach Anspruch 8, **dadurch gekennzeichnet, dass** die Aufnahmeeinrichtung (52) räumlich benachbart zu der Abgabeeinrichtung (46) angeordnet ist, bevorzugt in der Betriebsstellung der Vorrichtung unterhalb der Abgabeeinrichtung (46) positioniert ist.

10. Vorrichtung nach einem der Ansprüche 7 bis 9, **dadurch gekennzeichnet, dass** die Abgabeeinrichtung (46) einen Abstand von weniger als 40 cm, bevorzugt von weniger als 25 cm, besonders bevorzugt von weniger als 20 cm, zur Längsachse des Vorformlings aufweist, die durch dessen Öffnung geht.

11. Vorrichtung nach einem der vorstehenden Ansprüche, **dadurch gekennzeichnet, dass** entlang einer Trennzone (56) der Trenneinrichtung (12) eine weitere dritte Zufuhr- und /oder Abfuhreinrichtung (5) für Sterilfluid und/oder Umgebungsluft vorhanden ist, die während des Abtrennvorganges des Vorformlings vom Extrusionsschlauch eine kontaminationsarme Umgebung in der Trennzone (56) sicherstellt.

12. Vorrichtung nach Anspruch 11, **dadurch gekennzeichnet, dass** die Abfuhreinrichtung (5) bewegbar ist, bevorzugt abstimmbar auf die Bewegung der Trenneinrichtung (12).

13. Vorrichtung nach Anspruch 11 oder 12, **dadurch gekennzeichnet, dass** am Schlauchkopf (32) eine weitere vierte Zufuhreinrichtung für Sterilfluid vorgesehen ist, das als Stützfluid ins Innere des extrudierten Schlauchs einströmt und auf diesen einwirkt.

14. Vorrichtung nach einem der vorstehenden Ansprüche, **dadurch gekennzeichnet, dass** es sich bei den Behältererzeugnissen um Behälter für medizinische Zwecke, insbesondere um Ampullen oder Flaschen handelt.

15. Verfahren zum Herstellen eines geformten, befüllten und verschlossenen Behältererzeugnisses mit einer Vorrichtung nach einem der vorstehenden Ansprüche, mit zumindest den folgenden Herstellschritten:
- Aufbringen eines Sterilfluids auf die Öffnung eines Vorformlings während sich dieser zumindest teilweise und zeitweise im Bereich unterhalb des Schlauchkopfes (32) befindet;
- Aufbringen eines Sterilfluids auf die Öffnung eines Vorformlings während sich dieser zumindest teilweise und zeitweise im Bereich der Fülleinrichtung (16) befindet; und
- Ansteuern der Sterilfluidströme derart, dass diese quer zueinander verlaufen.

## Claims

1. Apparatus for producing moulded, filled and sealed container products made of plastics material, comprising
- a tube head (32) for dispensing at least one tube extruded using an extrusion means;
- a separating means (12) for separating a preform from the tube;
- a main mould (24) for receiving at least one preform in the context of moulding thereof,
- a transfer means (14) for transferring the preform from the tube head (32) to a filling means (16) for filling via an opening of the preform; and
- a supplying means (20) for a sterile fluid which allows a flow around at least one filling mandrel (22) of the filling means (16),
wherein a further supplying means (30) is provided for sterile fluid, which at least partially protects at least the opening of the preform in the region below the tube head (32) from contamination,
**characterised in that**
the flow direction of the respective sterile fluid, originating from one supplying means (20), assumes a predefinable angle of 65 degrees to 115 degrees to the flow direction of the respective sterile fluid of the further supplying means (30).

2. Apparatus according to claim 1, **characterised in that** at least partially during transfer of the preform from the tube head (32) to the filling means (16) by means of the transfer means (14), at least the opening of the preform is protected from contamination by a sterile fluid.

3. Apparatus according to either claim 1 or claim 2, **characterised in that** the flow direction of the respective sterile fluid, originating from one supplying means (20), assumes a predefinable angle of 90 degrees to the flow direction of the respective sterile fluid of the further supplying means (30).

4. Apparatus according to any of the preceding claims, **characterised in that** at least one, preferably movable, flow baffle plate (21, 23) is attached in the region of the filling means (16).

5. Apparatus according to any of the preceding claims, **characterised in that** one supplying means (20) comprises a flow surface (36) for the supply of sterile fluid with individual flow guide channels (38), which are connected together in a fluid-conveying manner and can be passed through by the individual filling mandrels (22).

6. Apparatus according to claim 5, **characterised in that**, in order to connect the flow guide channels (38) to one another in a fluid-conveying manner, a central channel (40) engages through the flow surface (36), said central channel having an extension (42) of the cross-sectional area at least at one end.

7. Apparatus according to any of the preceding claims, **characterised in that** the further supplying means (30) for supplying sterile fluid comprises a dispensing means (46), which is furnished with a flow straightener (48) to even out the fluid flow.

8. Apparatus according to claim 7, **characterised in that**, in addition to the dispensing means (46), a receiving means (52) is provided, which receives, at least partially, the sterile fluid flowing out of the dispensing means (46) and discharges it from a dispensing zone in the region of the transition.

9. Apparatus according to claim 8, **characterised in that** the receiving means (52) is arranged such that it is spatially adjacent to the dispensing means (46), preferably positioned beneath the dispensing means (46) when the apparatus is in the operating position.

10. Apparatus according to any of claims 7 to 9, **characterised in that** the dispensing means (46) is a distance of less than 40 cm, preferably less than 25 cm, more preferably less than 20 cm, from the longitudinal axis of the preform which passes through the opening thereof.

11. Apparatus according to any of the preceding claims, **characterised in that** a further third supplying and/or discharge means (5) for sterile fluid and/or ambient air is provided along a separation zone (56) of the separating means (12), said third supplying and/or discharge means guaranteeing a low-contamination environment in the separation zone (56) during the process to separate the preform from the extrusion tube.

12. Apparatus according to claim 11, **characterised in that** the discharge means (5) is movable, preferably adjustable to the motion of the separating means (12).

13. Apparatus according to either claim 11 or claim 12, **characterised in that** a further fourth supplying means for sterile fluid, which flows into the inside of the extruded tube and acts on said tube as a support fluid, is provided on the tube head (32).

14. Apparatus according to any of the preceding claims, **characterised in that** the container products are containers for medical purposes, in particular ampoules or bottles.

15. Method for producing a moulded, filled and sealed container product using an apparatus according to any of the preceding claims, having at least the following production steps:
- applying a sterile fluid to the opening of a preform while said preform is at least partially and temporarily in the region beneath the tube head (32);
- applying a sterile fluid to the opening of a preform while said preform is at least partially and temporarily in the region of the filling means (16); and
- controlling the sterile fluid flows in such a way that these run transversely to one another.

## Revendications

1. Installation de fabrication de produits de récipient moulés, remplis et fermés en matière plastique, comprenant
- une tête (32) à tuyau souple pour la distribution d'au moins un tuyau souple extrudé au moyen d'un disposition d'extrusion ;
- un dispositif (12) de séparation pour la séparation d'une pré-ébauche de tuyau souple ;
- un moule (24) principal pour la réception d'au moins une pré-ébauche dans le cadre de son façonnage ;
- un dispositif (14) de transfert pour le transfert de la pré-ébauche de la tête (32) à tuyau souple à un dispositif (16) de remplissage pour le remplissage de la pré-ébauche en passant par une ouverture ; et
- un dispositif (20) d'apport d'un fluide stérile, qui rend possible un écoulement autour d'au moins d'un mandrin (22) de remplissage du dispositif (16) de remplissage,
dans laquelle il y a un autre dispositif (30) d'apport de fluide stérile, qui protège au moins en partie de la contamination au moins l'ouverture de la pré-ébauche dans la partie en-dessous de la tête (32) à tube souple,
**caractérisée**
**en ce que** le dispositif d'écoulement du fluide stérile respectif en partant du un dispositif (20) d'apport fait un angle pouvant être donné à l'avance de 65 degrés à 115 degrés avec la direction d'écoulement du fluide stérile respectif de l'autre dispositif (30) d'apport.

2. Installation suivant la revendication 1, **caractérisée en ce qu'**au moins en partie pendant le transfert de la pré-ébauche de la tête (32) à tube souple au dispositif (16) de remplissage au moyen du dispositif (14) de transport, au moins l'ouverture de la pré-ébauche est protégée de la contamination par un fluide stérile.

3. Installation suivant la revendication 1 ou 2, **caractérisée en ce que** la direction d'écoulement du fluide stérile respectif, à partir du un dispositif (20) d'apport, fait un angle pouvant être prescrit de 90 degrés avec la direction d'écoulement du fluide stérile respectif de l'autre dispositif (30) d'apport.

4. Installation suivant l'une des revendications précédentes, **caractérisée en ce que**, dans la partie du dispositif (16) de remplissage, est monté au moins une tôle (21, 23) de déviation de l'écoulement, de préférence mobile.

5. Installation suivant l'une des revendications précédentes, **caractérisée en ce que** le un dispositif (20) d'apport a une surface (36) d'écoulement pour l'apport de fluide stérile avec divers canaux (38) de conduite d'écoulement, qui communiquent fluidiquement entre eux et dans lesquels peuvent passer les divers mandrins (22) de remplissage.

6. Installation suivant la revendication 5, **caractérisée en ce que**, pour la communication fluidique des canaux (38) de conduite d'écoulement entre eux, un conduit (40) central traverse la surface (36) d'écoulement, en ayant au moins à une extrémité un élargissement (42) de la surface de section transversale.

7. Installation suivant l'une des revendications précédentes, **caractérisée en ce que** l'autre dispositif (30) d'apport, pour l'apport de fluide stérile, a un dispositif (46) de distribution qui, pour l'uniformation de la conduite du fluide, est pourvu d'un dispositif (48) uniformisant l'écoulement.

8. Installation suivant la revendication 7, **caractérisée en ce que**, outre le dispositif (46) de distribution, il est prévu un dispositif (52) de réception, qui reçoit au moins en partie le fluide stérile évacué du dispositif (46) de distribution et l'évacue d'une zone de distribution dans la partie du transfert.

9. Installation suivant la revendication 8, **caractérisée en ce que** le dispositif (52) de réception est voisin dans l'espace du dispositif (46) de distribution, en étant de préférence dans la position de fonctionnement de l'installation en-dessous du dispositif (46) de distribution.

10. Installation suivant l'une des revendications 7 à 9, **caractérisée en ce que** le dispositif (46) de distribution est à une distance de moins de 40 cm, de préférence de moins de 25 cm, d'une manière particulièrement préférée de moins de 20 cm, de l'axe longitudinal de la pré-ébauche, qui passe par son ouverture.

11. Installation suivant l'une des revendications précédentes, **caractérisée en ce que** le long d'une zone (56) de séparation du dispositif (12) de séparation, il y a un autre troisième dispositif (5) d'apport et/ou d'évacuation de fluide stérile et/ou d'air ambiant, qui, pendant l'opération de séparation de la pré-ébauche du tuyau souple d'extrusion, assure un environnement peu contaminant dans la zone (56) de séparation.

12. Installation suivant la revendication 11, **caractérisée en ce que** le dispositif (5) d'évacuation est mobile, en pouvant être adapté, de préférence au mouvement du dispositif (12) de séparation.

13. Installation suivant la revendication 11 ou 12, **caractérisée en ce que**, sur la tête (32) à tuyau souple, il est prévu un autre quatrième dispositif d'apport de fluide stérile, qui entre comme fluide d'appui à l'intérieur du tuyau souple extrudé et agit sur celui-ci.

14. Installation suivant l'une des revendications précédentes, **caractérisée en ce que** les produits de récipient sont des récipients à des fins médicales, en particulier des ampoules ou des bouteilles.

15. Procédé de fabrication d'un produit de récipient, moulé rempli et fermé par une installation suivant l'une des revendications précédentes, comprenant au moins les stades de fabrication suivants :
- dépôt d'un fluide stérile sur l'ouverture d'une pré-ébauche pendant que celle-ci se trouve au moins en partie et de temps en temps dans la partie en-dessous de la tête (32) à tuyau souple ;
- dépôt d'un fluide stérile sur l'ouverture d'une pré-ébauche pendant que celle-ci se trouve au moins en partie et de temps en temps dans la partie du dispositif (16) de remplissage ; et
- commande des courants de fluide stérile de manière à ce que ceux-ci s'étendent transversalement l'un à l'autre.
